# EUROPEAN PATENT APPLICATION

(11) **EP 3 571 932 A1**
(43) Date of publication of application: **27.11.2019**
(21) Application number: 18174456.6
(22) Date of filing: 25.05.2018
(51) Int. Cl.: A23K 40/10, A23L 7/126, A23L 29/212, A23L 29/30, A23L 25/00

(54) **A BINDER FOR A SEED AND NUT SNACK AND A METHOD OF MAKING SAME**

(71) Applicant: Dunboige Limited, Belgooly, Co. Cork (IE)
(72) Inventor: O'DOWD, Helen, Belgooly, Co. Cork (IE); SCHNEIDER, Christin, Belgooly, Co. Cork (IE); GONDA, Irene, Belgooly, Co. Cork (IE)
(74) Representative: Purdylucey Intellectual Property

(57) **Abstract**

A food product comprising at least one seed, a cereal or a grain and a gelatinised starch.

## Description

### Field of the Invention

This invention relates to a binder and a binder for use in manufacturing an agglomerated seed and nut snack having a chewy or crunchy texture, a method of making the same, and the product comprising the binder. Specifically, the invention relates to a food product comprising regularly shaped clusters or other formed pieces of whole seeds and nuts and a method of making same, having a non-sticky binder which is free of refined sucrose, glucose syrup, high fructose corn syrup or glucose-fructose syrup and free of chemically modified starches, animal proteins, emulsifiers and hydrocolloids.

### Background to the Invention

There is a gap in the healthy snack market for healthier, nutrient-dense options, which are also low in sugar, have no added refined sugar, are high in fibre and protein, and low in carbohydrates. Seeds, being a source of proteins, fibre, essential fats, minerals and vitamins, are an underused and highly nutritious raw material, but in loose format are difficult to consume as a snack on the go. The majority of the high protein cereals, bars, and snacks on the market are based on soya, wheat or dairy, all of which are included in the list of the top 14 allergens which must be declared in the European Union (EU) and the eight most common allergenic foods considered by the US. Wheat fibre, which is used extensively in breakfast cereals and healthy snacks, while cheap, can be poorly tolerated by consumers who suffer from wheat intolerance or Irritable Bowel Syndrome (IBS) symptoms.

Currently, convenient wholefood snacks in the form of clusters, bars or others use sugars, high sugar fruit pastes, high glycaemic sugar syrups (such as fructose corn syrup), chemically modified starches, animal proteins, emulsifiers or hydrocolloids and combinations of same to bind the ingredients together and flavour the snacks. The sugars are used to allow setting and/or hardening of the food product to create a desired texture and ensure a prolonged shelf-life. The problem with using such materials is that their consumption may lead to adverse health effects in consumers due to their high content of sugars. In snacks and convenience foods, taste and texture are one of the primary drivers for consumption. Simply removing sugar without a replacement is not always an option.

EP2486804A1 discloses a method for producing a cereal bar using a binder consisting of starch, other (poly)saccharides, protein, and blends thereof to produce the cereal bar having a crunchy texture. US 2009/0148563 A1 discloses a method using a gum Arabic binding system for producing savoury, crunchy granola bars. However, neither of these documents describe a binding system and preparation method that allows the formation of a particulate sweet and/or savoury seed and/or nut-based product to be formed from a loose food mass without using hydrocolloids and or animal proteins.

It is therefore an object of the present invention to overcome at least one of the above-mentioned problems.

### Summary of the Invention

Broadly, the present invention is based on a particulate food product comprising one or more of seeds, nuts, wholegrains (milled, whole or otherwise processed, for example, puffed), grain-based ingredients, vegetables (dried or otherwise) and/or fruits (dried or otherwise) clustered together in a cubed, round or elliptical shape or other defined shapes, which is in a cohesive, shelf-stable, low-water activity product that is crunchy or chewy and easy to eat. Additional ingredients include an antioxidant and other nutraceuticals. The product is at least a good source of protein, fibre and minerals such as zinc, magnesium, iron and calcium. Depending on the variety, the product can be gluten-free, soy- and dairy-free, peanut-free, and is suitable for vegans or vegetarians. The product can be neutral in flavour, have a sweet or savoury flavour, and/or can be flavoured with additional ingredients such as herbs, spices, fruits, cocoa, chocolate, dairy-based ingredients (such as butter, cream, yoghurt, caramel and cheese), vegetables, alcohol, botanicals and nutraceuticals, precooked dried pulses and other sweet and savoury ingredients. The product can deliver various textures such as crunchy, chewy, hard and soft textures, and has impactful flavour complemented by the nuttiness of the seeds and nuts. The product is significantly more nutritious than many snack products currently on the market. The addition of precooked dried pulses will add protein and fibre without extra fat. The seed and nut snack of the present invention provides nutritional value without sacrificing taste and flavour, as well as possessing a good shelf life during which the texture remains chewy or crunchy without being sticky, hard, or crumbly.

Embodiments of the invention are directed to an agglomerated seed and nut snack with a crunchy or chewy texture. The agglomerated seed and nut snack comprises dry (particulate) ingredients bound together with an aqueous solution (binder) comprising water, vegetable oil and/or seed pastes (for example, tahini), a syrup (for example, agave syrup, honey, or other syrups, pastes or molasses derived from fruits or grains (for example, rice syrup, barley malt syrup), or other plant parts (for example, roots or trees *i.e.* maple syrup or birch sap) and/ or inulin syrup), with a pregelatinized corn starch and/or rice starch, or a combination thereof.

The nutritional value of the agglomerated seed and nut snack is not adversely affected by addition of sugars and fats in the binder. The resultant agglomerated seed and nut snack will appeal to a consumer who wants a nutritious snack with a crunchy or chewy texture, rather than a sticky texture, and with a natural, not excessively sweetened, taste.

The binder is made with water. The binder is sticky once made up to hold the loose dry ingredients together, but the binder within the product becomes non-sticky after baking. If baking is not required for a product, the binder can comprise a seed paste as a base instead of the water and vegetable oil. The binder is neutral in flavour to allow application in both sweet and savoury flavour profiles.

There is no heating step required (>50°C) to activate the starch or liquify the syrups as seen with typical cereal binders.

The pregelatinized starch allows cool-forming of the product and achieves a stable and intact product shape after forming that is easy to handle and transfer to the subsequent baking/drying step.

The binder minimizes build-up of residue on susceptible processing equipment known to the art during processing, as well as allowing the product to be sufficiently pliable for a sufficient period of time to facilitate sizing.

The binder also allows the base raw materials *i.e.* whole seeds, nuts, fruits pieces, *etc.* to retain their visual identity. The taste and texture of the particulates in the agglomerated seed and nut snack can be adjusted to suit consumer preference. The binder makes little or no contribution to the taste.

The formulation of the product is such that there is no requirement to sheet the product prior to forming, which is the case with conventionally produced cereal bars and other clustered snacks. Instead the product is formed directly from the food mass and the formed pieces retain their shape during subsequent processing steps. This allows for a more natural appearance of the product as it retains the whole seeds and nuts appearance compared with sheeted and cut cereal bars, which have cut/machined surfaces.

According to the present invention, there is provided, as set out in the appended claims, a food binding agent for a snack food comprising water, a plant or seaweed oil in a range from about 1 wt% and about 15 wt%, a seed or a nut paste in a range from about 1 wt% and about 50 wt%, a syrup in a range from about 1 wt% and about 50wt%, a pregelatinized starch or starch flour in a range from about 1 wt% and about 10 wt%, or a combination thereof.

Preferably, the oil is in a range of between about 1 wt% and about 5 wt%, the water is in a range of 1 wt% and 15 wt%, the pregelatinized starch or starch flour is in a range of between about 1 wt% and about 5 wt%, and the syrup is in a range of between about 5 wt% and about 15 wt%.

Preferably, the plant oil is selected from the list comprising sunflower oil, olive oil, vegetable oil, coconut oil, hemp seed oil, flaxseed oil, sesame seed oil, rape seed oil, palm oil, or a combination thereof.

Preferably, the seaweed oil is selected from a red algae, a brown algae, a green algae, or a combination thereof.

Preferably, the syrup is selected from honey, agave syrup, rice syrup, date syrup, oat syrup, barley malt syrup, maple syrup, birch syrup, inulin syrup, or a combination thereof.

Preferably, the binding agent further comprises an acid, a vinegar, a dairy ingredient, a flavouring, a fruit pulp, a fruit paste, a juice or a combination thereof.

There is also provided, as set out in the appended claims, a food binding agent for a snack food comprising a seed or a nut paste in a range from about 1 wt% and about 50 wt%, a pregelatinized starch or starch flour in a range from about 1 wt% and about 10 wt%, or a combination thereof.

Preferably, the pregelatinized starch or starch four is selected from the group consisting of rice starch, corn starch, potato starch, tapioca starch, sorghum starch, chicory starch, cassava starch, arrowroot starch, sago palm starch, or a combination thereof.

Preferably, the seed paste is selected from sesame paste (Tahini), sunflower seed paste or pumpkin seed paste, or a combination thereof.

Preferably, the nut paste is selected from almond, macadamia, pecan, walnut, hazelnut, pistachio, or cashew paste.

There is also provided, as set out in the appended claims, a food product comprising a food binding agent described above, in which the food binding agent is in the range of about 5 wt% to about 55 wt% of the product.

Preferably, the food product further comprises at least one seed or at least one nut, or a combination thereof.

Preferably, the food product also comprises a cereal or a grain, or a combination thereof.

Preferably, the cereal and grain are selected from rice, wheat, corn, barley, rye, oats, sorghum, millet, amaranth, kamut, quinoa, or a combination thereof.

Preferably, the at least one seed is selected from linseed (flaxseed), hemp seed, pumpkin seed, sunflower seed, chia seed, black caraway seed, amaranth seed, quinoa or a combination thereof.

Preferably, the seeds are milled, whole or otherwise processed, or a combination thereof. Preferably, the flaxseed is defatted.

Preferably, the at least one nut is selected from almond, walnut, pecan, cashew, peanut, macadamia, hazelnut or a combination thereof.

Preferably, the food product further comprises an antioxidant selected from the group consisting of tocopherols, cherry extract, vitamin C, acerola (Malpighia emarginata) extract, green tea extract, sage extract, ascorbyl palmitate, 3,5,4'-trihydroxy-trans-stilbene, Mentha spicate extract, turmeric extract, rosemary extract and combinations thereof.

Preferably, the food product further comprises a flavouring, natural sugar replacers, steviol glycosides, monk fruit, vitamins, minerals, chlorella, spirulina, wheatgrass, barley grass, alfalfa, maca, cocoa, turmeric, pea protein, rice crisps, rice flour, galacid powder, onion powder, yeast extract, herbs and spices and their extracts, natural colouring, botanicals, nutraceuticals, probiotics, seaweed products, a freeze-dried component, or a combination thereof.

Preferably, the vitamins are selected from vitamins A, B, B1, B2, B6, B12, C, D, E, or K, Niacin, Pantothenic acid, Folic acid, Biotin, or combinations thereof.

Preferably, the minerals are selected from Calcium, Magnesium, Iron, Copper, Iodine, Zinc, Manganese, Potassium, Selenium, Chromium, Molybdenum, Phosphorus, or combinations thereof.

Preferably, the freeze-dried component is a fruit, or a material derived from a fruit such as strawberry, apple, orange, apricot, grape, peach, pear, berries, mango, melon, banana, fig, citrus fruits, or a combination thereof.

Preferably, the freeze-dried component is a vegetable or product made from a vegetable including asparagus, pea pods, peas, broccoli, cauliflower, mixed vegetables, yellow red or green peppers, lotus fruit, celery, garlic, onion, lettuce, carrot, potato, corn or a combination thereof.

The food product, as described above, may have 5-40 wt% protein, 5-30 wt% fibre, less than 25wt% sugar for sweet varieties and less than 10wt% sugar for savoury varieties, and 10-30 wt% unsaturated fatty acids (dry weight).

The food product, as described above, may comprise 50-90 wt% seeds, 0-40 wt% Oats, 0.1-5 wt% Natural Flavouring, <1 wt% Yeast Extract, 0.5-5 wt% Starch, 5-20 wt% Rice Crispies, and 0.1-6 wt% Grass or Kelp Powder.

Preferably, the food product has a shelf life of at least 12 months when stored at ambient temperature.

The food product, as described above, for use in a healthy snack food or a pet food.

Preferably, the food product has a cubed, round, elliptical, rectangular, triangular, disc, bone, star, thimble, flower, animal, a cluster shape or any other shape.

There also provided, as set out in the appended claims, a method of producing the food product described above, the method comprising the steps of: premixing and blending dry ingredients being used to form a base mix; adding the binding agent to the base mix and mixing until the base mix is coated with the binding agent; forming the coated mixture into a desired shape; and drying or baking the shaped product.

Preferably, the method further comprises the step of blending additional ingredients selected from dried fruits or vegetables.

The food products comprise dry (particulate) ingredients in the range of between 45-95 wt%. The food products comprise either a liquid or dry binder, or a combination of both, range between about 5-55 wt%.

The amount of dry and liquid binder ingredients is selected to be high enough to provide effective binding of the dry particulate ingredients, but not sufficiently high as to interfere with the flavour or texture of the end product or to present an unattractive appearance. The amount of starch typically required to provide the necessary binding effect is between about 1 and about 10 wt%, based on the weight of the dried food product, and typically is between about 1 and about 5 wt%. The amount of syrup typically required to provide the necessary binding effect is between about 1 and about 50 wt%, based on the weight of the dry product, and typically is between about 4 and about 30 wt%. The amount of oil/seed and nut pastes typically required to provide the necessary binding effect is between about 1 and about 50 wt%, based on the weight of the dried product, and typically is between about 5 and about 10 of wt%.

The concentration of pregelatinized starch in water typically is between about 1 wt% and about 30 wt% based on the weight of the solution, more typically between about 5 wt% and about 25 wt%, and even more typically between about 7 wt% and about 18 wt%. If the concentration of starch is too low, longer drying time is required. If the concentration of starch is too high, the binder becomes too thick to handle.

Preferably, the food product described above comprises 5-40 wt% protein, 5-30 wt% fibre, less than 25 wt% sugar for sweet varieties and less than 10 wt% sugar for savoury varieties and 10-30 wt% unsaturated fatty acids (dry weight).

Preferably, the formed product can be further coated with a syrup, a cacao, a carob, a dairy-based or a honey coating following baking.

Preferably, the method further comprises the step of baking or drying.

Preferably, the method further comprises the step of packaging the product for storage. The packaging is hermetically sealed and can use a modified atmosphere. Ideally, the modified atmosphere is carbon dioxide, nitrogen, or a combination thereof.

Preferably, there is provided a method of producing the food product described above, the method comprising the steps of premixing and blending dry (particulate) ingredients (such as seeds, and/or nuts, and/or fruits, and/or vegetables, and/or cereals, and/or grains, and/or cereal crisps) together with flavouring ingredients, and/or botanicals, and/or nutraceuticals; separately preparing and blending wet binder ingredients with dry binder ingredients to form a complete binder; adding the complete binder to the blended particulate ingredients; mixing the dry ingredients mix with the complete binder until the binder completely coats all of the ingredients; forming a loosely bound mass of the coated mixture into a desired shaped product; and baking or drying the shaped product.

### Definitions

The term "food product" should be understood to mean a shaped, textured cluster of nuts, seeds (milled or whole) and/or fruits and vegetables. The shaped cluster can be cubed, round or elliptical in shape or other defined shapes, such as discs, bones, stars, thimble, triangle, flower, a character, an animal, and the like. The food product can be used as a general snack, a children's snack product and a pet food snack.

The term "base mix" should be understood to mean dry food ingredients that make up a base mix. The dry food ingredients are selected from one or more seeds (milled, whole or otherwise processed), nuts (milled, whole or otherwise processed), cereals (milled, whole or otherwise processed), grains (milled, whole or otherwise processed), fruit (dried or otherwise), vegetables (dried or otherwise), and other inclusions such as cacao products, chocolate; or combinations thereof.

In the specification, the term "nuts" should be understood to include pecans, peanuts, hazelnuts, almonds, walnuts, cashew, macadamia, pistachio, and other nuts known to skilled practitioners, and combinations thereof.

In the specification, the term "seeds" include sunflower seeds, pumpkin seeds, sesame seeds, linseed (flaxseed), Chia Seeds (*Salvia hispanica*)*,* black caraway seed, amaranth seed, quinoa, and other seeds known to the skilled practitioner; and combinations thereof. The seeds can be milled or whole or otherwise processed.

In the specification the term "starches" should be understood to mean: rice starch, corn starch, potato starch, tapioca starch, or combinations thereof. Typically, the starches are pregelatinized, that is, they are cooked and then dried in the starch factory on a drum dryer or in an extruder making the starch cold-water-soluble. Spray dryers are used to obtain dry starch sugars and low viscous pregelatinized starch powder, which is then used.

In the specification, the term "plant oil" should be understood to mean sunflower oil, olive oil, vegetable oil, coconut oil, hemp seed oil, flaxseed oil, sesame seed oil, rape seed oil, palm oil, argan oil, rosehip oil, canola oil, safflower oil or other seed oils or a combination thereof.

In the specification, the term "cereals and grains" should be understood to form part of the particulate dry ingredients and are selected from those typically found in cereal bars. These cereals and grains can be toasted, baked, flaked, precooked, puffed, extruded or otherwise. Cereals and grains are selected from rice, wheat, corn, barley, rye, oats, sorghum, millet, amaranth, kamut, quinoa and other cereals and grains. The identities of and relative proportions of the ingredients in the base mix are selected to provide the desired texture and flavor. Rice can be in the form of crispy rice, also known as toasted puffed rice, or can be toasted rice extrudate. Extruded, flaked or powders of plants and plant protein extracts such as pea protein crisps, soya flakes and others known to the skilled practitioner are used to achieve a good source of protein in the finished product. Similarly, corn can be in the form of flakes, toasted puffs, or popped corn. The other cereals and grains can be processed in manners known in the art. Skilled practitioners are familiar with the various toasted, baked, and processed cereals and grains that can form part of the particulate dry ingredients of bars and snacks of various shapes. Prepared agglomerates, such as granola or crispy muesli, also may form part of the particulate ingredients. Such products typically comprise oats (whether steel cut, rolled, or otherwise processed), wheat, sugar, and oil. Granolas and crispy muesli also may include other ingredients known to skilled practitioners. Such products add to the crunchy texture of bar and snacks of various shapes.

Other ingredients include fruits, vegetables, processed fruit, confectionary such as chocolate pieces, coconut (in various shapes) which can be toasted or untoasted, frozen ingredients (such as fruit, vegetables) and other additions known to skilled practitioners. Processed fruit may be in the form of agglomerates that comprise additional ingredients, such as sugars, pectins, or other gelatinizing agents. Dried fruit pieces include strawberry, apple, orange, apricot, grape, peach, pear, berries (blueberry, blackberry), mango, melon, raspberry, banana, citrus fruits, or a combination thereof, and other fruits known to skilled practitioners. The fruits are preferably fruit juice infused instead of sugar infused. Preferably, the vegetable is selected from asparagus, pea pods, peas, broccoli, cauliflower, mixed vegetables, yellow red or green peppers, lotus fruit, celery, garlic, onion, lettuce, carrot, potato, corn or a combination thereof.

Chocolate and cacao products *i.e.* nibs, cocoa powder, can be used in all product shapes and recipes (with the exception of the pet food products).

Extruded, flaked or powders of plants and plant protein extracts such as seed, nut, pea proteins, rice proteins, pea protein crisps, soya flakes, grass powders (such as barley grass or alfalfa powder and other known to the skilled practitioner), are used to achieve a good source of protein in the finished product.

The size of the dry (particulate) ingredients is limited only by the ability to process the materials and the texture of the snack. Tougher ingredients may preferably be cut into smaller sizes.

The size of any nut pieces present is dependent upon the desired taste and texture. The skilled practitioner can determine the appropriate size for nut pieces.

Similar considerations apply to the selection of the size of the fruit and vegetable pieces. For example, the pieces must be large enough to be perceived by the consumer as a fruit or vegetable piece but cannot be so large as to make processing difficult. Here, again, the skilled practitioner can determine the appropriate size for dried fruit pieces.

In the specification, the term "dry ingredients" or "dry particulate ingredients" should be understood to mean flavourings, vitamins, minerals, nutraceuticals and botanicals, probiotics and other inclusions such as seaweed (for example, kelp (*Luminaria digitate, Saccharina lattisima*)*,* carrageen (*Chondrus crispus*)*,* dulse (*Palmaria palmata*)*,* sea spaghetti (*Himanthalia elongate*)*,* sea lettuce (*Ulva lactuca*)*,* Chlorella)) or algae-based ingredients (*Rhodophyta, Phaeophyceae,* Nori, chlorella , spirulina, blue-green algae), both of which can be in the form of flakes, powder or crisps.

In the specification, the term "vitamins" should be understood to mean nutraceutical additives in the form of Vitamins A, B, B1, B2, B6, B12, C, D, E, K, Niacin, Pantothenic acid, Folic acid, Biotin.

In the specification, the term "minerals" should be understood to mean nutraceutical additives in the form of minerals such as Calcium, Magnesium, Iron, Copper, Iodine, Zinc, Manganese, Potassium, Selenium, Chromium, Molybdenum, Phosphorus.

Other compounds which could be added to the products include methylsulphynolmethane (MSM - is a natural sulphur compound also thought to help improve joint flexibility and reduce pain and inflammation), glucosamine (synthetic source), chondroitin (synthetic source), and other additives that aid in the health of bones, ligaments and cartilage.

In the specification, the term "flavouring" should be understood to mean substances which are added to food in order to impart or modify its taste and consisting of the following categories, flavourings, flavouring substances, flavouring preparations, fruit and vegetable extracts, dairy powders and flavourings, meat flavourings (chicken, liver, fish, beef, oxtail, buffalo, venison, lamb, mutton, turkey, game, *etc.),* yeast extracts, spice and herb extracts, spices, herbs, cocoa products, oleoresins, essential oils thermal process flavourings, smoke flavourings, syrups, (natural) sweeteners, *etc.*

In the specification, the term "nutraceutical" and "botanicals" should be understood to mean whole plants or extracts of plants whether from leaves, flowers, roots or fruits or combinations thereof either standardised or otherwise.

In the specification, the term "probiotic" should be understood to mean live cultures of bacteria or yeasts or combination of both for example kefir and kombucha.

In the specification, the term "dry binder ingredients" should be understood to mean dry ingredients are selected from edible starches, flours and other polysaccharides from any particular source, such as all parts of plants such as wheat, sorghum and rice, tuber such as potato (including those derived from white potatoes, yams and sweet potatoes, among others), chicory, cassava and arrowroot and the pith of plants such as the Sago palm and other sources including tapioca and the like. The "dry binder ingredients" can also be used as an ingredient for the "liquid binder". It is possible to add syrups to the dry binder ingredients when such syrups are available in dried format, for example, honey powder. Flavourings and antioxidants, and combinations thereof, in dry format can also be added to the dry binder ingredients.

In the specification, the term "liquid binder ingredients" should be understood to mean a binder recipe comprising one of more of water, vegetable oil (such as coconut, palm, olive, sunflower oil, rapeseed oil, and other suitable vegetable oils known to the skilled practitioner), seaweed oil, seed and/or nut pastes (such as sesame paste (Tahini), sunflower or pumpkin, almond or cashew paste and other suitable seed and nut pastes known to the skilled practitioner), acids, vinegars (white, red, balsamic, cider, rice, coconut, spirit, red wine, white wine), dairy ingredients (such as cream, butter, yoghurt, quark and cheese), fruit pulps, juices, syrup (such as honey, agave syrup, all variants of rice syrup, inulin syrup and other known to the skilled practitioner), flavourings, and antioxidants and combinations thereof.

The syrups used in the liquid binder of the present invention provide sufficient binding ability without interfering with the flavour or texture of the snack. The amount of syrup is selected based on the desired sweetness level and required sugar content of the snack.

Minor components also may be added to both the dry particulate ingredients and the binder solutions such as antioxidants (for example, vitamin C (ascorbic acid), rosemary and green tea extracts, tocopherols) and colourings.

It should also be noted that the dry binder and the wet binder described above may be used individually or in combination.

In the specification, the term "ambient temperature" should be understood to mean the temperature of the surrounding environment. For example, the ambient room temperature is generally 15°C to 25°C.

In the specification, the units "wt%" and "w/w" should be understood to mean Xg per 100g of the composition and can be used interchangeably.

The term "dairy ingredient" should be understood to mean a powder, liquid, paste, block or concentrate of a product derived from a mainly dairy source typically covered in the Codex Alimentarius International Food Standards for various dairy products, for example cheese powder, milk powder (from whole milk, low-fat milk, skimmed milk), yoghurt powder, caramel powder, yoghurt, milk, cheese, Whey powder, whey protein concentrates and isolates, or a combination thereof.

### Brief Description of the Drawings

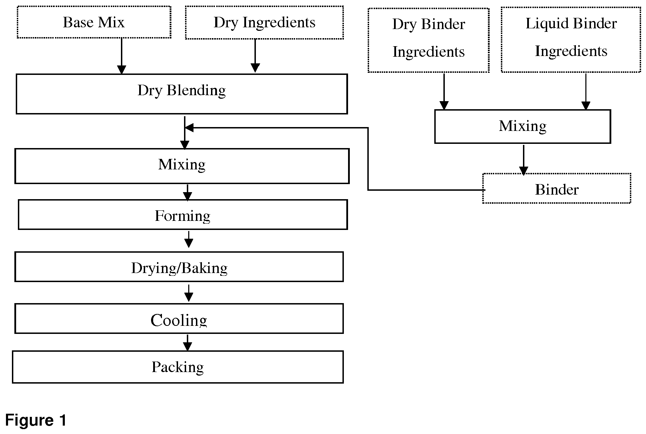

The invention will be more clearly understood from the following description of an embodiment thereof, given by way of example only, with reference to the accompanying drawings, in which:-
**Figure 1** is a schematic illustrating the manufacturing process used to make the product described herein.

### Detailed Description of the Drawings

The invention broadly relates to a binder recipe which can be used to create hard and crunchy or chewy and soft textured snacks. By changing the amount of syrup used, the sugar levels, baking time and temperatures can be decreased. Also, the binder is lower in sugar to allow application in savoury snacks. In particular, when using pregelatinized starch in the liquid binder, the binder permits the user to allow cold forming of the product and create texture during baking. The use of seeds and nuts. and having a sugar content low enough (between 1-5 wt%) for savoury varieties and high enough for sweet varieties (between 1-25 wt%), is also a feature of the invention.

### Material and Methods:

Typical ingredients that may be used in the food product are, but not limited to, the following in wt%:
Seeds 10-70
Nuts 1-35
Oats 1-50
Rice crispies 1-20
Pea Protein Crispies 1-20
Pulses 1-10
Coconut 1-20
Chocolate (dark, milk or white) 1-20
Syrups 1-20
Pregelatinised Corn Starch 1-10
Spices 1-10
Herbs 1-10
Sea Salt 1-2.5
Natural Flavouring 1-5
Plant oils 1-15
Seed and/or Nut pastes 1-50
Seed and/or Nut (whole, milled, chopped) 1-20
Dried Onion/Garlic 1-5
Vegetables 1-5
Fruits 5-20
Fruit powders 0.1-5
Vegetable Powder 0.1-10
Dairy in powder, fresh or liquid format 1-10
Cacao Products 1-10
Flour 1-5
Other Grains 1-10
Acids 0.1-5
Monkfruit/ Stevia Glycosides <0.5
Antioxidant <2
Vanilla Extract0.05-2
Essential Oils 0.01-5
Botanicals/Nutraceuticals 0.01-10
Probiotics 0-2
Vinegar 0.1-5
Sea Weed/Algae 1-6
Vitamins/Minerals 0-5

### Compositions

Please note that the units used for the ingredient composition are g/100g or wt%. Please note that the units used for the product composition are g/100g or wt%. Please note that the sum of all the parts of the composition make up 100g or 100wt% of the composition.

**Table 1: An example of two typical savoury food product recipe that can contain a combination of two or more of the following ingredients: are as follows:**

| | **Sea Salt & Black Pepper** | **Kale**, **Pumpkin Seed & Tangy lemon** |
|---|---|---|
| | Wt% | Wt% |
| **Seeds** | 50-70 | 25-45 |
| **Nuts** | - | 5-15 |
| **Rice crispies** | 10-20 | - |
| **Pea Protein Crispies** | - | 5-15 |
| **Agave Syrup** | 5-10 | 1-10 |
| **Inulin** | - | 5-15 |
| **Pregelatinised Corn Starch** | 1-5 | <1 |
| **Spices** | 1-5 | <1 |
| **Herbs** | - | <1 |
| **Sea Salt** | <2 | <2 |
| **Natural Flavouring** | <1 | <2 |
| **Olive oil** | - | 1-10 |
| **Tahini** | - | 5-15 |
| **Dried kale** | - | 1-5 |
| **Quinoa** | - | 1-5 |
| **Lactic Acid** | <0.5 | - |
| **Citric Acid** | - | <1 |
| **Antioxidant** | <0.5 | <0.5 |
| **Lemon Oil** | - | <0.1 |
| **Water** | 1-15% | 1-15% |

Table 1 shows the recipe of a typical savoury seed and nut snack.

**Table 2: An example of typical sweet food product recipes**

| | **Caramel, Almond and Sea salt** | **Chocolate, Coconut and Sour cherry, Muesli Cubes** |
|---|---|---|
| | Wt% | Wt% |
| **Seeds** | 25-45 | 10-30 |
| **Nuts** | 15-35 | - |
| **Oats** | - | 10-30 |
| **Pea Protein Crispies** | 5-10 | 1-15 |
| **Coconut** | - | 5-15 |
| **Dark Chocolate** | - | 1-10 |
| **Agave Syrup** | 5-15 | 5-15 |
| **Inulin** | 5-15 | 5-15 |
| **Sea Salt** | <2 | |
| **Natural Flavouring** | <1 | <1 |
| **Sunflower Oil** | 1-5 | |
| **Coconut oil** | - | 1-5 |
| **Dried Fruits** | - | 5-20 |
| **Vegetable** P**owder** | - | 1-10 |
| **Caramel Powder** | 1-5 | - |
| **Cocoa powder** | - | 1-5 |
| **Cacao Nibs** | - | 1-5 |
| **Flour or starch** | 1-5 | - |
| **Quinoa** | 1-5 | - |
| **Amaranth** | 1-5 | - |
| **Monkfruit/ Stevia** | <0.1 | - |
| **Antioxidant** | <0.5 | <0.5 |
| **Water** | 1-15 | 1-15 |

Table 2 outlines examples of sweet seed and nut snack products which can be either seed and nut focused or based on oats or other grains.

**Table 3: An example of typical pet food product recipes**

| | **Chicken and Liver Flavour** | **Beef Flavour** | **Fish Flavour** |
|---|---|---|---|
| | wt% | wt% | wt% |
| **Seeds** | 50-90 | 50-90 | 50-90 |
| **Oats** | 0-40 | 0-40 | 0-40 |
| **Natural Flavouring** | 0.1-5 | 0.1-5 | 0.1-5 |
| **Yeast Extract** | <1 | <1 | <1 |
| **Starch** | 0.5-5 | 0.5-5 | 0.5-5 |
| **Rice Crispies** | 5-20 | 5-20 | 5-20 - |
| **Grass or kelp powder** | 0.1-6 | 0.1-6 | 0.1-6 |
| **Water** | 1-15 | 1-15 | 1-15 |

**Table 4: Further examples of typical pet food product recipes**

| **Ingredient** | **wt% (g)** | **wt% (g)** |
|---|---|---|
| Hemp Seed | 10 | 50 |
| Milled Sunflower | 25 | 25 |
| Defatted | | 10 |
| Flaxseed Flour | 25 | |
| Whole Flaxseed | 10 | 5 |
| Yeast Extract | 2 | 2 |
| Starch | 2 | 2 |
| water | 6 | 6 |
| Crispies | 20 | - |
| | | |
| Total | **100** | **100** |

The ingredients and ingredient distribution for a typical pet food would be as follows: Seeds 50-90 wt%, Oats 0-40 wt%, Natural Flavouring 0.1-5 wt%, Yeast Extract <1 wt%, Starch 0.5-5 wt%, Rice Crispies 5-20 wt%, Grass or Kelp Powder 0.1-6 wt%.

It should be noted that a dry binder, liquid binder or combination of a dry binder and liquid binder is incorporated into each of the products listed above. In Table 1, the dry binder is starch and flavourings. The liquid binder comprises water, agave syrup, and/or inulin, and/or plant oils, seed pastes, and an antioxidant. In Table 2, the dry binder comprises flour or starch and flavouring. The liquid binder comprises agave syrup, inulin, flavouring, dairy powder, cocoa powder, plant oil and an antioxidant. In Tables 3 and 4 the dry binder comprises starch and the liquid binder comprises water, yeast extract and/ or flavourings.

### Storage of product for testing

The shelf life of the product is determined by using an Accelerated Shelf Life Test model, documenting any evidence that proves that the shelf life of that product is accurate and that it will maintain its safety and quality until the end of that shelf life according to European Commission (2002) Regulation No 178/2002, BRC 5.1 Product design/development.

Typically, a product representing the worst-case recipe with a high concentration of oilbased components and under harsh storage conditions is selected for the storage testing.
Measurements are taken at the following time points:
- Time Point 1 - Start of Trial.
- Time Points 2 - at 6 weeks at accelerated conditions (Equivalent to 3 months storage at ambient conditions).
- Time Point 3 - at week 12 (equivalent to 6 months storage at ambient conditions).
- Time Point 4 - at week 18 (equivalent to 9 months storage at ambient conditions).
- Time Point 5 - at week 24 (equivalent to 12 months storage at ambient conditions).

The samples were stored at 30°C. The rationale for the accelerated shelf life tests is that each 10°C increase in storage temperature above ambient roughly doubles the rate of chemical reactions, such as oxidation. Therefore, 30°C provides a roughly 2-fold increase in reaction rate. Ambient temperature is regarded as being room temperature varying between 15°-25°C (59°-77°F). An external testing facility will facilitate the storage of the samples at accelerated temperature (30°C) and conduct the chemical and microbiological analysis. The facility is compliant with the international standard ISO 17025. Water activity and Moisture will be measured internally by the Applicant.

Chemical Tests include determining the Peroxide Value (PV) in meq/kg and Free Fatty Acid (FFA) in %, which act as an indicator of rancidity, as chemical and enzymatic activity cause lipid breakdown, colour, odour, flavour, and texture changes.

Microbial testing is conducted for a total aerobic count and food pathogens such as *Salmonella, E. coli, Enterobacteria* to evaluate the food safety.

Peroxides are intermediate products of lipid oxidation, which would eventually lead to the formation of volatile compounds responsible for rancid off flavours. According to the literature, rancid notes can be detected from 30 to 40 meq/kg. Values less than this are considered acceptable and therefore the products at end of shelf life is acceptable in view of food quality.

Free Fatty Acids (FFA) are the products resulting from the hydrolysis of FFA esters. Presence of FFA esters is associated with hydrolytic rancidity in food products, which may result in the imparting of objectionable flavours to the food. High FFA concentrations indicate rancidity in food products. Generally, values <1 % would be considered acceptable.

Microbiological testing is conducted at the beginning of the study at week 0 and at the end of the study at week 24. Most, but not all, foodborne pathogenic bacteria require water activity levels in products to be greater than 0.91 to support them.

Turning now to **Figure 1****,** the textured food product is made, but not limited to this process and equipment type, by using the following steps:
- *Preparation of the dry mix:* Mix the base mix for a sufficient time to uniformly distribute each ingredient in a mixture.
- Add the dry ingredients to the base mix mixture and mix for a sufficient time to uniformly distribute each ingredient.
- *Preparation of binder:* Mix the dry binder and the liquid binder ingredients for a sufficient time until all ingredients are uniformly distributed to form the binder. The prepared binder requires a resting time varying from 1-30 minutes.
- The binder is added to the dry mix (mixed base mix with dry ingredients) and is mixed for a sufficient time to uniformly distribute the wet mix to cover all the ingredients in the dry mix.
- Any additional dry ingredients, such as sea salt and ingredients which break down easy like parsley, herbs, dried leaves, vegetables or fruits that are required, are to be added and mixed for a sufficient time until all ingredients are uniformly distributed.
- The resulting mix requires resting time of between 0-30 minutes before transferring to the forming/shaping step.
- The mixture is then formed to have the desired shape, typically by moulding into a desired format. Individual pieces can be formed before or after drying. The mix can be cut, punched, or otherwise formed into pieces of the desired shape and size. Similarly, a sheet can be cut into strips, evenly spread on a belt, followed by rolling and shaping. The mixture is then dried/baked, cut or punched as necessary to form individual pieces, then cooled and packed. Pieces cut after drying/baking typically are cut before cooling.
- Typical drying/baking parameters are 10-30min @ 100-130°C.

The finished food product is also packaged for storage. The packaging can be in consumer units or bulk quantities bag-in-box. The packaging material for consumer units is preferably a metalized polyester material (or a compostable material), which is hermetically sealed using a modified atmosphere. Various modified atmospheres can be used, such as, for example, carbon dioxide, nitrogen and combinations thereof. The packaged products typically have a moisture content of 4.5%-6% and a water activity of ≤ 0.4.

Using the recipes and methods described herein, a textured, plant-based, food product can be produced in a cubed, round, elliptical or any other shape that is required. These food products are wheat-free, low in sugars and carbohydrates, provide a source of protein and magnesium, are high in fibre and unsaturated fatty acids. They do not contain any refined sugar, high glycemic sugar syrups or modified starches. They have a much higher nutritive value than conventional seed and nut cluster products. The product of the invention is provided to meet the demand for more nutritious seed and nut snack offerings, while still maintaining the crunchy or chewy texture that consumers like without being sticky like traditional cluster snack products. The food product is non-genetically modified (non-GM), allergen free, plant based (a more sustainable protein source), and incorporates other highly nutritious ingredients with nutraceutical effects such as turmeric, wheatgrass, chlorella, spirulina, *etc.,* and has no added sugar. The clusters have distinctive culinary flavours and are lower in carbohydrates than crisps, popcorn or cereal bars. They are also oven-baked into crunchy, bite-sized pieces of seeds, nuts and dried vegetables and packaged in ready to eat snack packs.

They can also be tailored for the pet food industry by incorporating suitable flavours such as meat flavours (chicken, chicken and liver, beef, lamb, mutton, venison, game, fish, and the like).

The products will be significantly more nutritious than many snack products currently on the market containing lower levels of carbohydrates, and salt and higher levels of proteins fibre and essential fats.

In the specification, the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A food binding agent for a snack food comprising water, a plant or seaweed oil in a range from about 1 wt% and about 15 wt%, a seed or a nut paste in a range from about 1 wt% and about 50 wt%, a syrup in a range from about 1 wt% and about 50 wt%, a pregelatinized starch or starch flour in a range from about 1 wt% and about 10 wt%, or a combination thereof.

2. The food binding agent of Claim 1, wherein the oil is in a range of between about 1 wt% and about 5 wt%, the water is in a range of 1 wt% and 15 wt%, the pregelatinsed starch or starch flour is in a range of between about 1 wt% and about 5 wt%, and the syrup is in a range of between about 5 wt% and about 15 wt%.

3. The food binding agent of any one of Claim 1 or Claim 2, in which the syrup is selected from honey, agave syrup, rice syrup, date syrup, oat syrup, barley malt syrup, maple syrup, birch syrup, inulin syrup, or a combination thereof.

4. The food binding agent of any one of the preceding claims, further comprising an acid, a vinegar, a dairy ingredient, a flavouring, a fruit pulp, a fruit paste, a juice or a combination thereof.

5. A food binding agent for a snack food comprising a seed or a nut paste in a range from about 1 wt% and about 50 wt%, a pregelatinized starch or starch flour in a range from about 1 wt% and about 10 wt%, or a combination thereof.

6. The food binding agent of any one of the preceding claims, in which the seed paste is selected from sesame paste (Tahini), sunflower seed paste or pumpkin seed paste, or a combination thereof, and in which the nut paste is selected from almond, macadamia, pecan, walnut, hazelnut, or cashew paste.

7. A food product comprising a food binding agent of any one of the preceding claims, in which the food binding agent is in the range of about 5 wt% to about 55 wt% of the product.

8. The food product of Claim 7, further comprising at least one seed or at least one nut, or a combination thereof.

9. The food product of Claim 7 or Claim 8, in which the product also comprises a cereal or a grain, or a combination thereof.

10. The food product of any one of Claims 7-9, in which the seed is milled, whole or otherwise processed, or a combination thereof.

11. The food product of any one of Claims 7 to 10, further comprising an antioxidant selected from the group consisting of tocopherols, cherry extract, vitamin C, acerola (*Malpighia emarginata*) extract, green tea extract, sage extract, ascorbyl palmitate, 3,5,4'-trihydroxy-trans-stilbene, *Mentha spicate* extract, turmeric extract, rosemary extract and combinations thereof.

12. The food product of any one of Claims 7 to 11, further comprising a flavouring, natural sugar replacers, steviol glycosides, monk fruit, vitamins, minerals, chlorella, spirulina, wheatgrass, barley grass, alfalfa, maca, cocoa, turmeric, pea protein, rice crisps, rice flour, galacid powder, onion powder, yeast extract, herbs and spices and their extracts, natural colouring, botanicals, nutraceuticals, probiotics, seaweed products, a freeze-dried component, or a combination thereof.

13. The food product according to any one of Claims 7 to 12 having 5-40 wt% protein, 5-30 wt% fibre, less than 25wt% sugar for sweet varieties and less than 10wt% sugar for savoury varieties, and 10-30 wt% unsaturated fatty acids (dry weight).

14. The food product according to any one of Claims 7 to 13, in which the product has a cubed, round, elliptical, rectangular, triangular, disc, bone, star, thimble, flower, animal, a cluster shape or any other shape.

15. A method of producing the food product as claimed in Claim 7, the method comprising the steps of: premixing and blending dry ingredients being used to form a base mix; adding the binding agent to the base mix and mixing until the base mix is coated with the binding agent; forming the coated mixture into a desired shape; and drying or baking the shaped product.
